# EUROPÄISCHE PATENTSCHRIFT

(11) **EP 1 145 921 B1**
(45) Veröffentlichungstag und Bekanntmachung des Hinweises auf die Patenterteilung: **30.05.2007**
(21) Anmeldenummer: 01107863.1
(22) Anmeldetag: 10.04.2001
(51) Int. Cl.: B60R 21/16

(54) **Baugruppe mit einem Gassack**
Assembly comprising an airbag
Ensemble avec un coussin gonflable

(30) Priorität: 14.04.2000 DE 20006927 U
(43) Veröffentlichungstag der Anmeldung: 17.10.2001
(73) Patentinhaber: TRW Automotive GmbH, 73553 Alfdorf (DE)
(72) Erfinder: Acker, Dominique, 73553 Alfdorf (DE); Heigl, Jürgen, 73560 Böbingen (DE); Heilig, Alexander, 73550 Wissgoldingen (DE); Hofmann, Sven, 73525 Schwäbisch Gmünd (DE)
(74) Vertreter: Sties, Jochen

(56) Entgegenhaltungen:
- DE-A- 4 304 152
- DE-A- 19 843 111
- US-A- 5 072 966
- US-A- 5 439 247
- US-A- 5 984 348

## Beschreibung

Die Erfindung betrifft eine Baugruppe, gemäß dem Oberbegriff des Anspruchs 1.

Gassäcke werden in Rückhaltevorrichtungen mit großem Erfolg eingesetzt, um den Fahrzeuginsassen zum Beispiel beim Aufprall des Fahrzeuges auf ein Hindernis vor Verletzungen zu schützen. Um auch bei seitlichen Kollisionen oder einem Überschlag des Fahrzeugs Schutz zu bieten, werden Seitengassäcke verwendet. Bekannt sind Gassäcke, die vor der Entfaltung in der Dachkonstruktion oder der A-Säule des Fahrzeugs angeordnet sind und über Abspannungen an Fahrzeugteilen stabilisiert werden. Ebenfalls sind Gassäcke bekannt, die vor ihrer Entfaltung in der Fahrzeugtür untergebracht sind und sich entfaltet an der B-Säule des Fahrzeugs und/oder der Türbrüstung abstützen können.

Da bei einem Unfall sehr oft die Seitenscheiben des Fahrzeugs zu Bruch gehen und deshalb keine Stützwirkung mehr ausüben können, muß ein Seitengassack nicht nur die Bewegungsenergie des Fahrzeuginsassen unter Vermeidung von Verletzungen abbauen, sondern auch verhindern, daß der Fahrzeuginsasse oder auch Körperteile wie Kopf oder Hände ins Freie geschleudert werden.

Bei Fahrzeugen ohne Dachkontur, insbesondere Cabriolets, ist dieser Schutz besonders wichtig. Gleichzeitig ergeben sich hier aufgrund des fehlenden Fahrzeugdaches Schwierigkeiten, dem Gassack eine genügend hohe Stabilität zu verleihen. Herkömmliche Gassäcke, die sich aus der Tür entfalten und sich an der B-Säule, dem Dach oder dem Fensterrahmen abstützen, sind hier offensichtlich nicht einsetzbar.

In der gattungsgemäßen US-A-5 984 348 wird eine Konstruktion vorgestellt, bei der ein aufblasbarer Gassack seitlich von zwei langgestreckten Schläuchen gestützt wird. Die Schläuche haben einen Innendruck von 30 bar und sind über etwa die Hälfte ihrer Länge an der Fahrzeugtür abgestützt.

Bei der Anordnung nach der DE-A-43 04 152 ist die Seitenscheibe durch zwei teilweise überlappende Gassäcke abgedeckt, von denen einer am Dachrahmen und einer in der Türbrüstung angeordnet ist. Die Verbindung der beiden Gassäcke löst sich, wenn die Seitenscheibe zerstört ist, so daß die Gassäcke nach außen klappen können, um Fahrzeugkonturen abzudecken.

Die US-A-5 439 247 zeigt einen Gassack, bei dem ein äußerer Schlauch mehrere innere Kammern umgibt. Der Gassack ist in der Fahrzeugtür angeordnet.

Ein Gassack für ein Cabrio ist in der DE-A-198 43 111 gezeigt. Hier ist ein schlauchförmiger Gassack zwischen dem hinteren Rand der Türbrüstung und einem vorderen oberen Bereich der Tür aufgespannt.

Die US-A-5 072 966 zeigt einen in der Fahrzeugtür angeordneten und aufgeblasen die Türbrüstung bzw. die Seitenscheibe abdeckenden Gassack.

Die Aufgabe der Erfindung besteht darin, auch für Fahrzeuge ohne Dachkontur einen Gassack zur Verfügung zu stellen, der das Herausschleudern des Insassen verhindern kann. Zu diesem Zweck sind die Merkmale des Anspruchs 1 vorgesehen. Der Gassack gewinnt die notwendige Stabilität aus der Abstützung im Bereich der A-Säule und vorzugsweise an der Türbrüstung. Hierunter ist zu verstehen, daß sich der Gassack entweder an der A-Säule selbst oder an dem Abschnitt des Türrahmens, der in Nähe der A-Säule liegt, abstützt. Dies stabilisiert den Gassack im Bereich zwischen der Türbrüstung und der A-Säule. Der hohe Innenüberdruck im Gassack sorgt dafür, daß auch der freiliegende, d.h. nicht abgestützte Bereich des Gassackes beim Aufprall eines Insassen oder dessen Körperteilen nicht nach außen nachgibt.

Vorteilhafterweise ist der Gassack gasdicht ausgeführt. Darunter ist zu verstehen, daß das Material des Gassackes selber gasdicht ist und daß der Gassack nicht über Ausströmöffnungen verfügt. Da das Druckgas nicht aus dem Gassack entweichen kann, behält der Gassack seine Form und den hohen Innenüberdruck über einen beträchtlichen Zeitraum, der vorzugsweise größer als 5 Sekunden ist. So bleibt der Schutz für den Fahrzeuginsassen auch bei einem Überschlag des Fahrzeuges bestehen.

In einer bevorzugten Ausführungsform der Erfindung weist die Fahrzeugtür eine Türbrüstung auf, und der Gassack stützt sich entlang dem größten Teil der Türbrüstung ab. Die große Auflagefläche des Gassackes an der Türbrüstung bewirkt eine erhöhte Stabilität. Es ist vorteilhaft, wenn sich der Gassack weit bis zur Vorderseite der Tür erstreckt, um die Hände des Fahrzeuginsassen daran zu hindern, aus dem Fahrzeug geschleudert zu werden. Dazu ist der Gassack so geformt, daß vor allem der vordere Fensterbereich nahezu vollständig abgedeckt wird. Auf diese Art gewinnt der Gassack außerdem die größtmögliche Stabilität aus der Abstützung an der A-Säule und der Türbrüstung. Der Gassack erstreckt sich vorzugsweise ebenfalls bis zum fahrzeugrückwärtigen Ende der Türbrüstung, um auch den Kopf des Fahrzeuginsassen zu schützen.

In einer weiteren bevorzugten Ausführungsform der Erfindung weist der Gassack zwei Kammern auf, von denen die erste, äußere Kammer schlauchförmig mit einem hohen Innenüberdruck und die zweite, innere Kammer kissenförmig mit einem geringeren Innenüberdruck ist, wobei die erste, äußere Kammer die zweite, innere Kammer umgibt. Die äußere Kammer bildet einen stabilen Rahmen aufgrund des hohen Innenüberdruckes, der dem Gassack die notwendige Stabilität verleiht, und mit dem sich der Gassack an der A-Säule und an der Türbrüstung abstützt. Die innere Kammer ist als Kissen mit geringerem Innenüberdruck ausgebildet, so daß ein Insasse, der in den Gassack geschleudert wird, von diesem nicht wieder abprallt, sondern weich aufgefangen wird. Auf diese Weise läßt sich die notwendige Stabilität mit der notwendigen Nachgiebigkeit des Gassackes kombinieren.

Bevorzugt sind die innere und die äußere Kammer nicht strömungsmäßig untereinander verbunden, so daß der von der äußeren Kammer gebildete Rahmen seine Stabilität während der gesamten Standzeit des Gassacks beibehält.

Der Gassack kann in gefaltetem Zustand in der Türbrüstung oder in der A-Säule untergebracht sein.

Weitere Merkmale und Vorteile der Erfindung gehen aus der nachfolgenden Beschreibung der Ausführungsbeispiele hervor, mit Bezug auf die beigefügten Zeichnungen. In diesen zeigen:
- Fig. 1a in einer Seitenansicht eine erste Ausführungsform der Erfindung,
- Fig. 1b in einer Vorderansicht die Baugruppe aus Fig. 1a,
- Fig. 2a in einer Seitenansicht eine zweite Ausführungsform der Erfindung, und
- Fig. 2b in einer Schnittansicht die Baugruppe nach Fig. 2a.

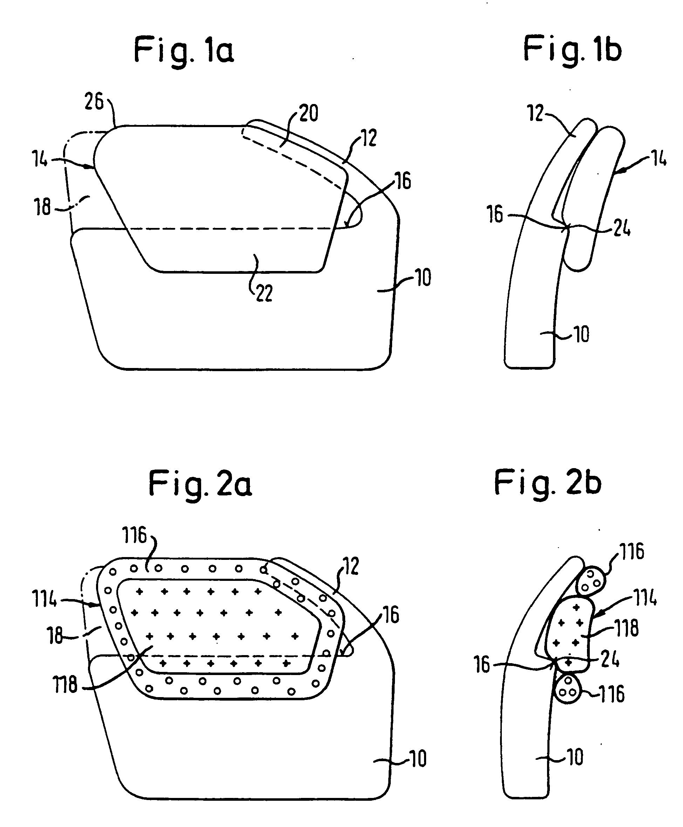

Die Figuren 1a und 1b zeigen eine erfindungsgemäße Baugruppe aus einer Fahrzeugtür 10, dem Bereich der A-Säule 12 eines Fahrzeuges sowie einem Gassack 14. Die Tür 10 verfügt über eine Türbrüstung 16.

Vor seiner Entfaltung ist der Gassack 14 vorzugsweise in der Tür 10 untergebracht. Bei einem Unfall, zum Beispiel dem Aufprall des Fahrzeuges auf ein Hindernis, wird der Gassack 14 von einem nicht gezeigten Sensor aktiviert und über Druckgas aus einem nicht gezeigten Gasgenerator aufgeblasen. Der Gassack 14 ist in allen Zeichnungen in diesem aufgeblasenen Zustand gezeigt.

Der Gassack 14 selbst besteht aus einem gasdichten Material und weist keine Abström- oder Entlüftungsöffnungen auf. Die Dichtigkeit des Gassackes 14 ist so ausgelegt, daß dieser für einen längeren Zeitraum (in etwa 5 Sekunden) einen hohen Innenüberdruck beibehält, der vorzugsweise über 1 bar beträgt.

Der Gassack 14 erstreckt sich entlang der Türbrüstung 16, so daß der wesentliche Teil des Seitenfensters 18 durch den Gassack 14 abgedeckt ist. Insbesondere erstreckt sich der Gassack 14 bis zur Vorderseite des Seitenfensters 18, in Richtung des Vorderendes des Fahrzeugs, um die Hände und Unterarme eines Fahrzeuginsassen auffangen zu können, damit diese nicht aus dem Fahrzeug herausgeschleudert werden. Ebenfalls nutzt der Gassack 14 einen weiten Abschnitt der A-Säule 12 bzw. des entsprechenden Abschnittes des Türrahmens zur Abstützung aus. Auf diese Weise entstehen zwei flächige Abstützungen 20, 22 für den Gassack 14, die diesem Stabilität verleihen.

Es kann vorgesehen sein, daß der Gassack zum Zwecke der Abstützung an der Türbrüstung 16 so geformt ist, daß er im aufgeblasenen Zustand eine Kante 24 aufweist, die auf der Türbrüstung 16 aufliegt. Diese Kante oder Knick 24 in der Kontur des Gassackes 14 verhindert eine Verschiebung des Gassackes 14 nach unten.

Aufgrund des hohen Innendruckes und der gegebenenfalls vorgesehenen Abstützung weist auch das freie Ende 26 des Gassackes 14, das nicht an der A-Säule 12 oder der Türbrüstung 16 abgestützt ist, eine genügend hohe Stabilität auf, um insbesondere den Kopf des Fahrzeuginsassen davor zu bewahren, aus dem Fahrzeug hinausgeschleudert zu werden.

In den Fig. 2a und 2b ist eine weitere vorteilhafte Ausführungsform der Erfindung dargestellt. Bereits in der ersten Ausführungsform beschriebene Teile weisen die gleichen Bezugszeichen auf. Anordnung und Größe des Gassackes 114 nach dieser zweiten Ausführungsform sind ähnlich zu denen in der ersten Ausführungsform. Der Gassack 114 nach der zweiten Ausführungsform besteht aus zwei Kammern 116, 118, wobei die erste Kammer 116 schlauchförmig gestaltet ist und einen Rahmen bildet (mit Kreisen markiert), der die zweite, kissenförmig ausgebildete Kammer 118 (mit Kreuzen markiert) umgibt.

Die Innendrücke der beiden Kammern 116, 118 unterscheiden sich, wobei in der äußeren Kammer 116 ein hoher Innenüberdruck von über 1 bar herrscht, so daß diese Kammer 116 eine genügende Stabilität aufweist, um als stabiler Rahmen zu dienen. Dieser Rahmen stützt sich analog zum ersten Ausführungsbeispiel sowohl im Bereich der A-Säule 12 als auch an der Türbrüstung 16 ab. Die innere zweite Kammer 118 weist dagegen einen deutlich geringeren Innenüberdruck auf, um zu verhindern, daß ein Fahrzeuginsasse, der in den Gassack fällt, von diesem wieder abprallt. Die beiden Kammern 116, 118 sind strömungsmäßig nicht untereinander verbunden. Die Form des Übergangs zwischen den beiden Kammern 116, 118 kann dazu genutzt werden, die Kante oder den Knick 24 zu bilden, mit dem sich der Gassack 114 an der Türbrüstung 16 abstützt. Es ist auch denkbar, daß die innere Kammer 118 noch weitere Unterteilungen aufweist.

## Patentansprüche

1. Baugruppe aus einer Fahrzeugtür (10) eines Cabrios ohne Dachkontur, die eine Türbrüstung (16) aufweist, einer A-Säule (12) des Cabrios und einem aufblasbaren Gassack (14; 114),
wobei der Innenüberdruck in wenigstens einem Teil des aufgeblasenen Gassackes (14; 114) über 1 bar liegt,
**dadurch gekennzeichnet, daß** der Gassack (14: 114) so geformt ist, daß der vordere Fensterbereich nahezu vollständig abgedeckt ist und
der Gassack (14; 114) im aufgeblasenen Zustand über zwei flächige Abstützungen (20, 22) entlang der Türbrüstung (16) und im Bereich der A-Säule (12) die notwendige Stabilität gewinnt,

2. Baugruppe nach Anspruch 1, **dadurch gekennzeichnet, daß** der Gassack (14; 114) gasdicht ausgeführt ist.

3. Baugruppe nach einem der vorhergehenden Ansprüche, **dadurch gekennzeichnet, daß** die Fahrzeugtür (10) eine Türbrüstung (16) aufweist und daß sich der Gassack (14; 114) entlang dem größten Teil der Türbrüstung (16) abstützt.

4. Baugruppe nach einem der vorhergehenden Ansprüche, **dadurch gekennzeichnet, daß** der Gassack (114) zwei Kammern (116, 118) aufweist, von denen die erste, äußere Kammer (116) schlauchförmig ist und einen hohen Innenüberdruck hat und die zweite, innere Kammer (118) kissenförmig ist und einen geringeren Innenüberdruck hat, wobei die erste, äußere Kammer (116) die zweite, innere Kammer (118) umgibt.

5. Baugruppe nach Anspruch 4, **dadurch gekennzeichnet, daß** die beiden Kammern (116, 118) nicht strömungsmäßig untereinander verbunden sind.

## Claims

1. An assembly consisting of a vehicle door (10) of a convertible without a roof contour, the vehicle door having a windowsill (16), and further consisting of an A-pillar (12) of the convertible and an inflatable gas bag (14; 114),
the internal overpressure exceeding 1 bar in at least a part of the inflated gas bag (14; 114),
**characterized in that** the gas bag (14; 114) is shaped such that the front window area is covered practically completely, and
in the inflated condition, the gas bag (14; 114) gains the required stability by means of two supports (20, 22) extending across an area along the windowsill (16) and in the region of the A-pillar (12).

2. The assembly as set forth in claim 1, **characterized in that** the gas bag (14; 114) is fabricated so as to be gas-tight.

3. The assembly as set forth in either of the preceding claims, **characterized in that** the vehicle door (10) has a windowsill (16) and that the gas bag (14; 114) is supported along the major part of the windowsill (16).

4. The assembly as set forth in any of the preceding claims, **characterized in that** the gas bag (14; 114) includes two chambers (116, 118), the first, outer chamber (116) of which is tubular and has a high internal overpressure and the second, inner chamber (118) is cushion-shaped and has a lower internal overpressure, the first, outer chamber (116) surrounding the second, inner chamber (118).

5. The assembly as set forth in claim 4, **characterized in that** the two chambers (116, 118) are not in fluid communication with each other.

## Revendications

1. Ensemble constitué par une portière de véhicule (10) d'un cabriolet sans contour de toit, la portière de véhicule comprenant un appui de portière (16), par un colonne A (12) du cabriolet et par un coussin à gaz (14; 114) gonflable,
la surpression intérieure étant supérieure à 1 bar dans au moins une partie du coussin à gaz (14; 114) gonflé,
**caractérisé en ce que** le coussin à gaz (14; 114) est formé de telle sorte que la région avant de fenêtre est pratiquement complètement recouverte et
**en ce qu'**à l'état gonflé, le coussin à gaz (14; 114) obtient la stabilité nécessaire au moyen de deux supports plans (20, 22) le long de l'appui de portière (16) et dans la région de la colonne A (12).

2. Ensemble selon la revendication 1, **caractérisé en ce que** le coussin à gaz (14; 114) est réalisé de manière à être étanche au gaz.

3. Ensemble selon l'une des revendications précédentes, **caractérisé en ce que** la portière de véhicule (10) comprend un appui de portière (16) et **en ce que** le coussin à gaz (14; 114) prend appui le long de la plus grande partie de l'appui de portière (16).

4. Ensemble selon l'une des revendications précédentes, **caractérisé en ce que** le coussin à gaz (114) comprend deux chambres (116, 118) dont la première chambre (116) extérieure est tubulaire et a une surpression intérieure élevée, et la deuxième chambre (118) intérieure est en forme de coussin et a une surpression intérieure moins élevée, la première chambre (116) extérieure entourant la deuxième chambre (118) intérieure.

5. Ensemble selon la revendication 4, **caractérisé en ce que** les deux chambres (116, 118) ne communiquent pas par écoulement.
